# EUROPEAN PATENT APPLICATION

(11) **EP 1 734 750 A2**
(43) Date of publication of application: **20.12.2006**
(21) Application number: 06012449.2
(22) Date of filing: 16.06.2006
(51) Int. Cl.: H04N 5/44, H04N 5/445

(54) **Method and apparatus for receiving digital broadcasting**

(30) Priority: 16.06.2005 KR 20050052116
(71) Applicant: SAMSUNG ELECTRONICS CO., LTD., Suwon-si, Gyeonggi-do (KR)
(72) Inventor: Park, Young-Sik, Yeongtong-gu Suwon-si Gyeonggi-do (KR)
(74) Representative: Lang, Johannes

(57) **Abstract**

A method and an apparatus are provided for receiving digital broadcasting in an apparatus for receiving digital broadcasting under a state in which at least two local broadcasting stations are prepared to provide digital broadcasting, the local broadcasting stations use a second frequency band, and a wide broadcasting station covering broadcasting service areas of the local broadcasting stations uses a first frequency band. The method includes the steps of changing a frequency band of a received digital frequency band if a user requests change of a broadcasting service while the digital broadcasting signal provided through one of the first frequency band and the second frequency band is being received and outputting, creating and displaying a list of broadcasting programs according to channels provided through the changed frequency band based on digital broadcasting program guiding data which are previously stored, and outputting a digital broadcasting signal received through a predetermined channel.

## Description

### BACKGROUND OF THE INVENTION

### Field of the Invention:

The present invention relates to an apparatus for receiving digital broadcasting. More particularly the present invention relates to a method and an apparatus for receiving digital broadcasting, which allows a user to receive a broadcasting service corresponding to an area at which the user is positioned as well as a wide area broadcasting service.

### Description of the Related Art:

Recently, digital broadcasting has become popular in place of conventional analog broadcasting in order to provide users with broadcasting services having high image quality, high sound quality and high Quality of Service (QoS). Such digital broadcasting comprises satellite digital broadcasting and terrestrial digital broadcasting.

The satellite digital broadcasting pursues mobile services and enables a user to view multi-channel multimedia broadcasting through portable receivers, such as a mobile phone or a personal digital assistant (PDA) device, or vehicle receivers regardless of location and time.

The terrestrial digital broadcasting derived from digital audio broadcasting (DAB) denotes mobile multimedia broadcasting which uses a very high frequency (VHF) channel and provides complex broadcasting services, such as television broadcasting, radio broadcasting and data broadcasting by using multiple channels. Although conventional terrestrial service providers have managed one analog channel, digital broadcasting service providers manage a plurality of digital channels and these services are called an "ensemble".

In addition, in the terrestrial digital broadcasting, three ensembles can be provided through one VHF channel, in which one video channel, two audio channels and one data channel can be supported per ensemble. In addition, the terrestrial digital broadcasting is mainly focused on vehicle drivers. Currently, according to the development in digital broadcasting technologies and mobile communication technologies, the digital broadcasting service enabling a user to view digital broadcasting while the user is moving has become popular. In particular, a digital multimedia broadcasting (DMB) service through a mobile communication terminal gradually becomes popular.

In the meantime, the digital broadcasting is provided from a wide broadcasting station adaptable for a wide band broadcasting service and a local broadcasting station adaptable for a local band broadcasting service for a specific area, in other words, a local area.

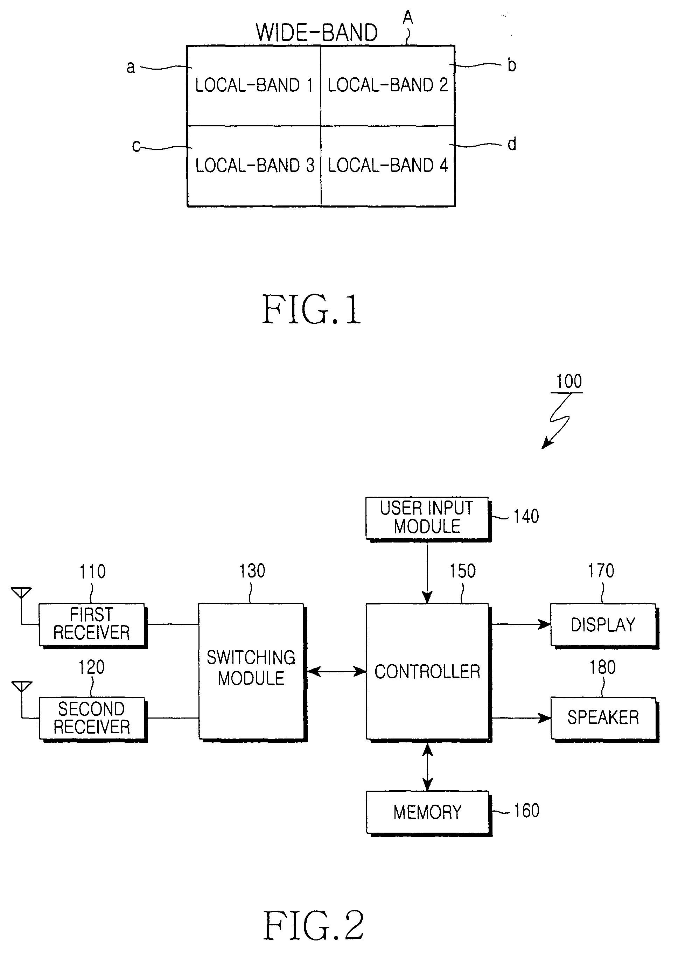

FIG. 1 is a view illustrating a conventional configuration of a wide band broadcasting service and a local band broadcasting service.

The wide band broadcasting service can be provided to the whole local areas *a, b, c* and *d* of a wide area A, and each of four local band broadcasting services can be provided only to a corresponding local area.

Since the areas *α, b,* c and d receiving the local band broadcasting service are included in a wide band area, the local areas can receive the wide band broadcasting service.

Accordingly, a digital broadcasting receiver is preferably designed in such a manner that the receiver can receive a broadcasting service corresponding to an area, in other words, the area *α,* at which a user is positioned as well as the wide band broadcasting service when the user using the receiver is positioned at the area *α.*

### SUMMARY OF THE INVENTION

Accordingly, the present invention has been made to address the above-mentioned problems, and an object of the present invention is to provide an apparatus and a method for receiving digital broadcasting, which can easily receive wide area broadcasting and local area broadcasting.

Another object of the present invention is to provide an apparatus and a method for receiving digital broadcasting, which can easily switch bands between wide area broadcasting and local area broadcasting provided through different frequency bands, respectively.

To accomplish at least the above objects, a method is provided for receiving digital broadcasting in an apparatus for receiving digital broadcasting, which receives digital broadcasting signals provided through a first frequency band and a second frequency band, under a state in which at least two local broadcasting stations are prepared to provide digital broadcasting, the local broadcasting stations use the second frequency band, and a wide broadcasting station covering broadcasting service areas of the local broadcasting stations uses the first frequency band. The method comprises changing a frequency band of a received digital frequency band if a user requests change of a broadcasting service while the digital broadcasting signal provided through one of the first frequency band and the second frequency band is being received and outputting. A list of broadcasting programs is created and displayed according to channels provided through the changed frequency band based on digital broadcasting program guiding data which are previously stored. A digital broadcasting signal received through a predetermined channel is output if the predetermined channel is selected.

According to another aspect of the present invention, an apparatus for receiving digital broadcasting is provided. The apparatus receives digital broadcasting signals provided through a first frequency band and a second frequency band, under a state in which at least two local broadcasting stations are prepared to provide digital broadcasting, the local broadcasting stations use the second frequency band. A wide broadcasting station covering broadcasting service areas of the local broadcasting stations uses the first frequency band. The apparatus comprises a user input module for receiving a user manipulation signal, a first receiver for receiving a digital broadcasting signal provided through the first frequency band and digital broadcasting program guiding data provided through the first frequency band and the second frequency band, a second receiver for receiving a digital broadcasting signal provided through the second frequency band and digital broadcasting program guiding data provided through the first frequency band and the second frequency band, a memory for storing the digital broadcasting program guiding data, a switching module for performing switching between the first receiver and the second receiver, a controller for controlling the switching module to perform switching between the first receiver and the second receiver if change of a broadcasting service is requested through the user input module while a digital broadcasting signal provided through one of the first receiver and the second receiver is being output and creating a list of broadcasting programs according to channels provided through a frequency band of a digital broadcasting signal received in the switched receiver based on the digital broadcasting program guiding data stored in the memory, and an output module for outputting the list of the broadcasting programs according to channels or the digital broadcasting signal received through the predetermined channel under control of the controller if a predetermined channel is selected through the user input module.

### BRIEF DESCRIPTION OF THE DRAWINGS

The above and other exemplary objects, features and advantages of the present invention will be more apparent from the following detailed description taken in conjunction with the accompanying drawings, in which:
FIG. 1 is a view illustrating a conventional configuration of a wide band broadcasting service and a local band broadcasting service;
FIG. 2 is a block diagram illustrating a structure of an apparatus for receiving digital broadcasting according to an exemplary embodiment of the present invention.
FIG. 3 is a flowchart illustrating the operation of an apparatus for receiving digital broadcasting according to an exemplary embodiment of the present invention;
FIG. 4 is a flowchart illustrating an example of a detailed procedure of creating the list of broadcasting programs according to channels in the operation shown in FIG. 3.
FIG. 5 is a flowchart illustrating a procedure of creating a broadcasting program list according to channels in the operation shown in FIG. 3 according to an exemplary embodiment of the present invention.
FIG. 6 is a flowchart illustrating a detailed procedure of outputting a digital broadcasting signal received through a selected channel in the operation shown in FIG. 3; and
FIGs. 7a through 7c are views illustrating an example of the operation of an apparatus for receiving digital broadcasting according to an exemplary embodiment of the present invention.

Throughout the drawings, like reference numerals will be understood to refer to like parts, components and structures.

### DETAILED DESCRIPTION OF EXEMPLARY EMBODIMENTS

Hereinafter, exemplary embodiments of the present invention will be described in detail with reference to the accompanying drawings. In the following description of the present invention, a detailed description of known functions and configurations incorporated herein will be omitted for clarity and conciseness.

FIG. 2 is a block diagram illustrating a structure of an apparatus 100 for receiving digital broadcasting according to an exemplary embodiment of the present invention.

The apparatus 100 for receiving digital broadcasting comprises a first receiver 110, a second receiver 120, a switching module 130, a user input module 140, a controller 150, a memory 160, a display 170 and a speaker 180. According to an exemplary embodiment of the present invention, the display 170 and the speaker 180 perform a function of an output module in the apparatus 100.

According to an exemplary implementation in a digital broadcasting receiving apparatus, the apparatus 100 can receive digital broadcasting signals provided with first and second frequency bands under the assumption that at least two local broadcasting stations are prepared to provide digital broadcasting, the local broadcasting stations provide second broadcasting services using the second frequency band, and a wide broadcasting station covering broadcasting service areas of the local broadcasting stations provides a first broadcasting service using the first frequency band. The first frequency band may correspond to a band III having the range of 174MHz to 240MHz, and the second frequency band may correspond to a L-band having the range of 1452MHz to 1492 MHz.

The first receiver 110 receives a digital broadcasting signal, in other words, digital broadcasting data, provided through the first frequency band and digital broadcasting program guiding data provided through the first frequency band and the second frequency band so as to deliver the digital broadcasting signal and the digital broadcasting program guiding data to the controller 150 under the control of the controller 150. The digital broadcasting program guiding data may be received from one of the wide broadcasting station and the local broadcasting station. In addition, the digital broadcasting program guiding data may be obtained from electronic program guide (EPG) and fast information channel (FIC).

The second receiver 120 receives a digital broadcasting signal, in other words, digital broadcasting data, provided through the second frequency band and digital broadcasting program guiding data provided through the first and the second frequency bands so as to deliver the digital broadcasting signal and the digital broadcasting program guiding data to the controller 150 under the control of the controller 150.

Although the apparatus 100 comprises an individual receiver in order to receive a digital broadcasting signal provided through either the first frequency band or the second frequency band in FIG. 2, the apparatus 100 may be implemented such that one receiver can be used to receive digital broadcasting signals provided through the first band and the second frequency band.

The switching module 130 performs switching between the first receiver 110 and the second receiver 120 under the control of the controller 150.

The user input module 140 receives an external command, in other words, a user manipulation signal through key input, voice input, etc., to be delivered to the controller 150.

In addition, if the apparatus 100 for receiving digital broadcasting is dedicated to the reception of digital broadcasting, the user input module 140 can be implemented as a user interface module such as a key pad through which a user manipulation signal is directly input.

Meanwhile, if the apparatus 100 for receiving digital broadcasting can perform mobile communication functions, the user input module 140 is preferably implemented such that, for example, a command delivered from a communication controller, such as MSM, for controlling the mobile communication functions is input.

The controller 150 controls the operation of the apparatus 100 for receiving digital broadcasting. In addition, the controller 150 de-modulates and decodes a digital broadcasting signal received in the first receiver 110 or the second receiver 120 so as to output the de-modulated and decoded signal to the display 170 and the speaker 180 through a video signal processing module (not shown) and an audio signal processing module (not shown).

In addition, if a change of a broadcasting service is requested through the user input module 140 while digital broadcasting signal received to one of the first receiver 110 and the second receiver 120 is being output, the controller 15 controls the switching module 130 to perform a switching operation with respect to the first receiver 110 and the second receiver 120. That is, if a user requests the change of a broadcasting service while the apparatus 100 for receiving digital broadcasting is receiving and outputting a digital broadcasting signal provided in the first frequency band through the first receiver 110, the controller 150 switches to the second receiver 120 by using the switching module 130, receives a digital broadcasting signal provided in the second frequency band through the second receiver 120, and outputs the digital broadcasting signal through the display 170 and the speaker 180.

The controller 150 creates the list of broadcasting programs according to channels provided in a frequency band, in other words, the second frequency band, of a digital broadcasting signal received through the switched receiver, such as the second receiver 120, based on digital broadcasting program guiding data stored in the memory 160. Then, the controller 150 outputs the list of broadcasting programs to the display module 170. The list of broadcasting programs according to channels comprises channel names and broadcasting program names.

According to an exemplary implementation, the controller 150 can be configured to determine if the digital broadcasting program guiding data stored in the memory 160 has been updated before creating the list of the broadcasting programs according to channels based on the digital broadcasting program guiding data. If the digital broadcasting program guiding data have not been updated, the controller 150 controls the digital broadcasting program guiding data to be updated. In addition, the controller 150 may control digital broadcasting program guiding data stored in the memory 160 to be updated according to a predetermined period of time.

In addition, the controller 150 may search for channels enabling a broadcasting service by scanning a frequency band corresponding to a digital broadcasting signal received in the switched receiver according to an exemplary embodiment of the present invention and then create a broadcasting program list for the searched channel based on the digital broadcasting program guiding data.

If a predetermined channel is selected by selection information of a user through the user input module 140 in the list of broadcasting programs for channels displayed in the display 170, the controller 150 outputs a digital broadcasting signal received through the selected channel by using the display 170 and the speaker 180. Herein, in the case in which a predetermined channel is selected based on the selection information of a user, the controller 150 may display detailed information about a broadcasting program having been currently broadcasted through the selected channel on the display 170 by retrieving the detailed information from the digital broadcasting program guiding information. Then, the controller 150 controls the digital broadcasting signal received through the selected channel to be output if broadcasting output request exists, in other words, input of an enter key or a reproduction key, through the user input module 140 in the state in which the detailed information is displayed on the display 170.

The memory 160 stores various pieces of information required for controlling the operation of the apparatus 100 for receiving digital broadcasting according to an exemplary embodiment of the present invention. In addition, the memory 160 stores digital broadcasting program guiding data received in the first receiver 110 and the second receiver 120 under the control of the controller 150. The digital broadcasting program guiding data may be updated according to a predetermined period of time under the control of the controller 150.

The display 170 and the speaker 180 visibly and audibly output the received digital broadcasting signal and digital broadcasting program guiding information generated by using the digital broadcasting program guiding data stored in the memory 160.

The display 170 may be constructed by using, for example, a liquid crystal display (LCD) device capable of supporting a digital broadcasting signal through sufficient resolution. In an exemplary implementation where the LCD device is implemented through a touch screen scheme, the display 170 may operate as an input module.

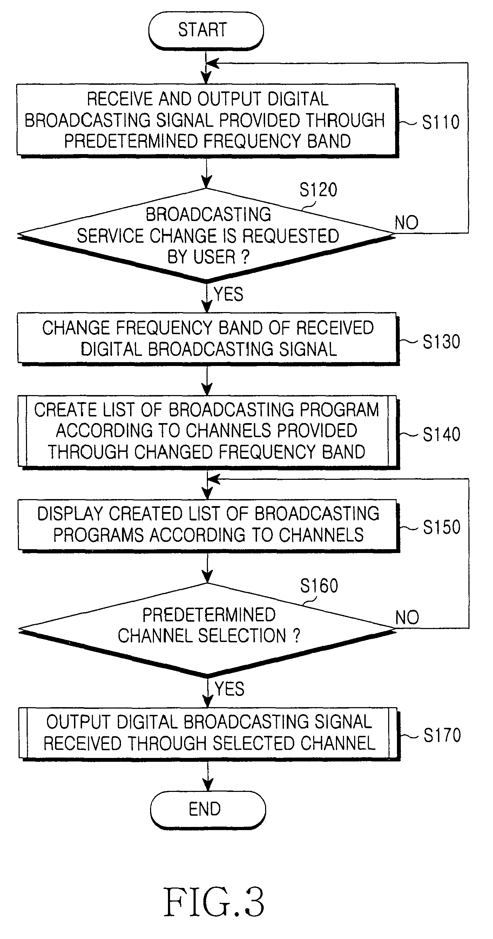

FIG. 3 is a flowchart illustrating the operational procedure of the apparatus 100 according to an exemplary embodiment of the present invention. In other words, FIG. 3 is a flowchart illustrating a method of receiving digital broadcasting signals provided through a first frequency band and a second frequency band, respectively, by using the apparatus 100 under the state in which at least two local broadcasting stations are prepared to provide digital broadcasting, the local broadcasting stations use the second frequency band, and a wide broadcasting station covering broadcasting service areas of the local broadcasting stations uses the first frequency band.

Referring to FIGs. 2 and 3, the controller 150 receives a digital broadcasting signal provided through a predetermined frequency band, in other words, a first frequency band, and outputs the received digital broadcasting signal to the display 170 and the speaker 180 at step S 110. In other words, the controller 150 receives and outputs by using the first receiver 110 or the second receiver 120 a digital broadcasting signal provided through one of the first frequency band and the second frequency band according to the request of the user. In addition, the controller 150 may receive digital broadcasting program guiding data provided through either the first frequency band or the second frequency band and stores the digital broadcasting program guiding data in advance. The digital broadcasting program guiding data may be provided together with the digital broadcasting signal from one of the local broadcasting stations or the wide broadcasting station. In addition, the user may additionally request and receive the digital broadcasting program guiding data.

The controller 150 determines if a user requests for the change of a broadcasting service, in other words, the change of a frequency band, at step S120. If the user has requested the change of the broadcasting service, the controller 150 controls a frequency band of a digital broadcasting signal received by controlling the switching module 130 to switch bands between the first receiver 110 and the second receiver 120 at step S130. For example, if a digital broadcasting signal received in step S 110 is received through the first frequency band, the controller 150 switches to the second receiver 120 so as to change a current frequency band of a digital broadcasting signal into the second frequency band, so that the second receiver 120 can receive a digital broadcasting signal.

The controller 150 creates the list of broadcasting programs according to channels, which are provided through the changed frequency band, based on digital broadcasting program guiding data stored in the memory 160 at step S140. The list of the broadcasting programs according to channels comprises channel names and broadcasting program names.

The controller 150 displays the created list of the broadcasting programs according to channels on the display 170 at step S 150.

The controller 150 determines if a predetermined channel is selected based on user selection information in the displayed list of the broadcasting programs according to channels at step S 160.

If the predetermined channel is selected, the controller 150 outputs a digital broadcasting signal received through the selected channel on the display 170 and the speaker at step S 170.

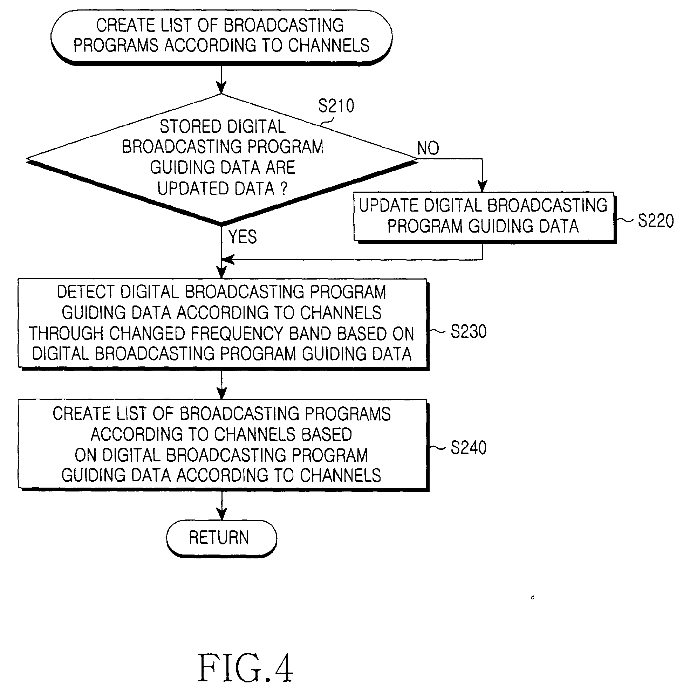

FIG. 4 is a flowchart illustrating a detailed procedure of creating the list of broadcasting programs according to channels in the operation shown at step S 140 in FIG. 3.

Referring to FIGs. 2 and 4, the controller 150 changes a frequency band of a digital broadcasting signal received by controlling the switching module 130 to switch bands between the first receiver 110 and the second receiver 120 at step S 130 shown in FIG. 3 and then determines if digital broadcasting program data stored in the memory 160 have been updated at step S210.

As the determination result, if the digital broadcasting program guiding data stored in the memory 160 have not been updated, the controller 150 updates the digital broadcasting program guiding data at step S220.

If the digital broadcasting program guiding data stored in the memory 160 have been updated at step 210, the controller 150 extracts digital broadcasting program guiding data according to channels through the changed frequency band from the digital broadcasting program guiding data at step S230.

Herein, for example, if the digital broadcasting program guiding data are data obtained through EPG information, in order to extract the digital broadcasting program guiding data according to channels, the controller 150 preferably uses network information table information, broadcaster information table information, service description table information and event information table information which is table information used for constructing the EPG.

The NIT information comprises information practically relating to satellites and network names. The BIT information is used for transferring broadcasting information. The broadcasting information comprises the items of official announcement, broadcasting station names, and a current channel list. In addition, the SDT information is used for transferring each channel information and comprises the names of organized channels, names of consignment broadcasting providers, uniform resource locator (URL) information about a channel, a channel type, and so on. In addition, the EIT information represents information about each program and comprises a channel number, a program name, program URL information, information about program broadcasting time, and brief description about a program.

In addition, if the digital broadcasting program guiding data are obtained through a fast information channel (FIC), it is preferred that the controller 150 uses the following information from among the FIC information in order to extract digital broadcasting program guiding data according to channels.

The information comprises an ensemble label representing the name of a broadcasting station, a service label representing a channel name, such as a KBS 1 channel and a KBS 2 channel, a service identifier for identifying a service, a service data type for distinguishing between audio, video, and data, service component identifiers representing components, in other words, components representing that predetermined broadcasting data comprise audio data and video data, used for making a service, a sub-channel identifier for identifying a sub-channel, and information about a sub-channel starting address.

The controller 150 creates a list of broadcasting programs according to channels in the changed frequency band based on the digital broadcasting program guiding data according to the extracted channels and returns at step S240.

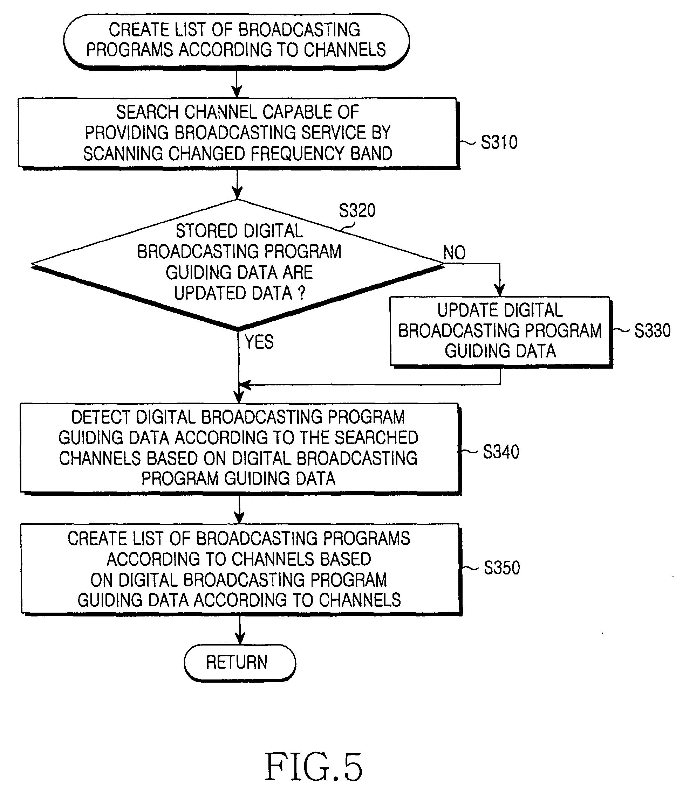

FIG. 5 is a flowchart illustrating a procedure of creating a broadcasting program list according to channels in the operation shown at step S 140 in FIG. 3 according to an exemplary embodiment of the present invention.

The controller 150 changes a frequency band of a digital broadcasting signal received by controlling the switching module 130 to perform switching between the first receiver 110 and the second receiver 120 in step S130 shown in FIG. 3 and then searches for channels enabling a broadcasting service by scanning the changed frequency band at step S310. Since a scheme for scanning the frequency band is generally known, the detailed description about the scheme will be omitted for clarity and conciseness.

The controller 150 determines if digital broadcasting program guiding data stored in the memory 160 have been updated at step S320.

If the digital broadcasting program guiding data have not been updated, the controller 150 updates the digital broadcasting program guiding data at step S330.

If the digital broadcasting program guiding data stored in the memory 160 have been updated in step S320, the controller 150 extracts digital broadcasting program guiding data of the searched channels from the digital broadcasting program guiding data at step S340.

Then, the controller 150 creates a list of broadcasting programs for the searched channels based on the digital broadcasting program guiding data for the searched channels and returns at step S350.

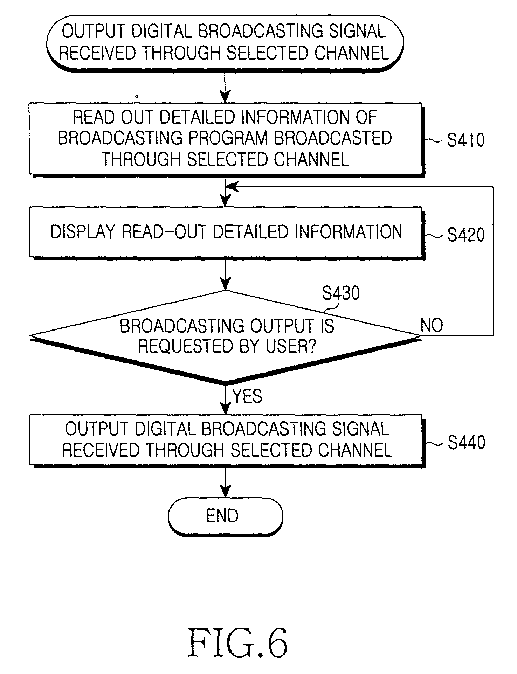

FIG. 6 is a flowchart illustrating a detailed procedure of outputting a digital broadcasting signal received through the selected channel in the operation shown in FIG. 3. In other words, FIG. 6 is a flowchart illustrating step S170 shown in FIG. 3 in greater detail.

Referring to FIGs. 2 and 6, if a predetermined channel is selected in the list of broadcasting programs according to channels displayed on the display 170, the controller 150 reads out detailed information about a broadcasting program which is currently broadcasted through the selected channel from the detected digital broadcasting program guiding data according to channels at step S410. For example, the detailed information comprises a start time of a corresponding broadcasting program, an end time of the program, the brief description about the program, major actors and major actresses of the program, a director of the program, and the rating of the program.

The controller 150 displays the read-out and detailed information at step S420.

The controller 150 determines if a user requests the output of broadcasting, in other words, the user presses an enter key or a reproduction key, at step S430.

If the user has requested the output of the broadcasting, the controller 150 outputs a digital broadcasting signal received through the selected channel to the display 170 and the speaker 180 at step S440.

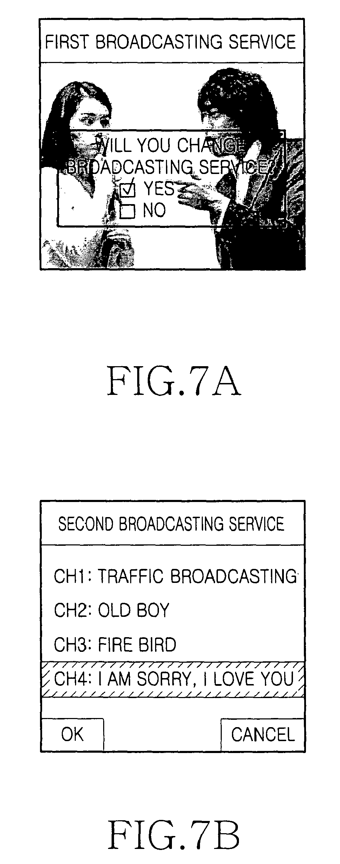

FIGs. 7a through 7c are views for explaining the operation of an apparatus for receiving digital broadcasting according to an exemplary embodiment of the present invention.

FIG. 7a is a view illustrating that an apparatus for receiving digital broadcasting displays a query allowing a user to select the change of a broadcasting service with a message asking if the user change a broadcasting service in response to the request for the change of the broadcasting service by the user while outputting the digital broadcasting service provided through the first frequency band, in other words, the first broadcasting service.

Herein, the message is preferably displayed at a predetermined position on an image of digital broadcasting through an "on-screen display" scheme.

If the user selects a check button of "yes" and then presses the enter key through key input on the image shown in FIG. 7a, the apparatus for receiving digital broadcasting performs switching with respect to receivers and displays the list of broadcasting programs according to channels provided through the second frequency band as shown in FIG. 7b while waiting for the receipt of a digital broadcasting signal provided through the second frequency band, in other words, the second broadcasting service.

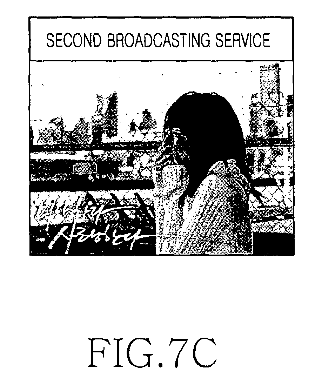

If a predetermined channel, such as channel number 4 (CH 4), is selected by the user while the apparatus for receiving digital broadcasting is displaying the image shown in FIG. 7b, the apparatus receives and outputs a digital broadcasting signal through the selected channel as shown in FIG. 7c.

In the meantime, if a predetermined channel, such as channel number 4 (CH 4), is selected by the user while the apparatus for receiving digital broadcasting display the image shown in FIG. 7b, the apparatus may display detailed information, such as main actors/actresses, broadcasting program description, etc., about a broadcasting program which is currently broadcasted through the selected channel.

As described above, according to exemplary embodiments of the present invention, an apparatus and a method are provided for receiving digital broadcasting, which can easily receive wide area broadcasting and local area broadcasting, thereby improving the convenience of the user.

According to exemplary embodiments of the present invention, it is easy to perform reception switching between wide area broadcasting and local area broadcasting provided through different frequency bands, respectively.

While the invention has been shown and described with reference to certain preferred embodiments thereof, it will be understood by those skilled in the art that various changes in form and details may be made therein without departing from the spirit and scope of the invention. Consequently, the scope of the invention should not be limited to the embodiments, but should be defined by the appended claims and equivalents thereof.

## Claims

1. A method for receiving digital broadcasting, where the local broadcasting stations use a second frequency band, and a wide broadcasting station covering broadcasting service areas of the local broadcasting stations uses a first frequency band, the method comprising the steps of:
changing a frequency band of a received digital broadcasting signal if a change of a broadcasting service is requested while the digital broadcasting signal provided through at least one of the first frequency band and the second frequency band is being received;
creating and displaying a list of broadcasting programs according to channels provided through the changed frequency band based on stored digital broadcasting program guiding data; and
outputting a digital broadcasting signal received through a predetermined channel if the predetermined channel is selected.

2. The method as claimed in claim 1, wherein the first frequency band comprises a band-III having a range of 174MHz to 240MHz, and the second frequency band comprises a L-band having a range of 1452MHz to 1492MHz.

3. The method as claimed in claim 1, wherein the list of the broadcasting programs according to channels comprises at least one of channel names and broadcasting program names.

4. The method as claimed in claim 1, further comprising a step of receiving and storing the digital broadcasting program guiding data provided through the first frequency band and the second frequency band.

5. The method as claimed in claim 4, wherein the digital broadcasting program guiding data are received from at least one of the wide broadcasting station and the local broadcasting stations.

6. The method as claimed in claim 1, wherein the step of creating and displaying the list of the broadcasting programs comprises:
detecting the digital broadcasting program guiding data according to channels provided through the changed frequency band based on the stored digital broadcasting program guiding data; and
creating and displaying the list of the broadcasting programs according to channels based on the digital broadcasting program guiding data according to channels.

7. The method as claimed in claim 1, wherein the step of creating and displaying the list of the broadcasting programs comprises:
searching for at least one channel capable of providing a broadcasting service by scanning the changed frequency band;
detecting digital broadcasting program guiding data according to the searched channels based on the digital broadcasting program guiding data; and
creating and displaying a list of broadcasting programs according to channels based on the digital broadcasting program guiding data according to channels.

8. The method as claimed in claim 6, wherein the step of creating and displaying the list of the broadcasting programs further comprises:
determining if the digital broadcasting program guiding data are updated data; and
updating the digital broadcasting program guiding data if the digital broadcasting program guiding data are not updated data.

9. The method as claimed in claim 7, wherein the step of creating and displaying the list of the broadcasting programs further comprises:
determining if the digital broadcasting program guiding data are updated data; and
updating the digital broadcasting program guiding data if the digital broadcasting program guiding data are not updated data.

10. The method as claimed in claim 1, wherein the step of outputting the digital broadcasting signal further comprises a step of reading out and displaying detailed information of a broadcasting program which is currently broadcasted through a predetermined channel based on the digital broadcasting program guiding data according the channels if the predetermined channel is selected from the list of the broadcasting programs according to channels.

11. The method as claimed in claim 10, further comprising a step of outputting a digital broadcasting signal received through the selected channel if an output of broadcasting is requested in a state in which the detailed information is displayed.

12. An apparatus for receiving digital broadcasting, where the local broadcasting stations use a second frequency band, and a wide broadcasting station covering broadcasting service areas of the local broadcasting stations uses a first frequency band, the apparatus comprising:
an input module for receiving a manipulation signal;
a first receiver for receiving a digital broadcasting signal provided through the first frequency band and digital broadcasting program guiding data provided through the first frequency band and the second frequency band;
a second receiver for receiving a digital broadcasting signal provided through the second frequency band and digital broadcasting program guiding data provided through the first frequency band and the second frequency band;
a memory for storing the digital broadcasting program guiding data;
a switching module for performing switching between the first receiver and the second receiver;
a controller for controlling the switching module to perform switching between the first receiver and the second receiver if change of a broadcasting service is requested through the input module while a digital broadcasting signal provided through at least one of the first receiver and the second receiver is being output and creating a list of broadcasting programs according to channels provided through a frequency band of a digital broadcasting signal received in the switched receiver based on the digital broadcasting program guiding data stored in the memory; and
an output module for outputting the list of the broadcasting programs according to channels or the digital broadcasting signal received through the predetermined channel under control of the controller if a predetermined channel is selected through the input module.

13. The apparatus as claimed in claim 12, wherein the first frequency band comprises a band-III having a range of 174MHz to 240MHz, and the second frequency band comprises a L-band having a range of 1452MHz to 1492MHz.

14. The apparatus as claimed in claim 12, wherein the list of the broadcasting programs according to channels comprises at least one of channel names and broadcasting program names.

15. The apparatus as claimed in claim 12, wherein the digital broadcasting program guiding data are received from one of the wide broadcasting station and the local broadcasting stations.

16. The apparatus as claimed in claim 12, wherein the controller determines if the digital broadcasting program guiding data are updated data before a list of broadcasting programs according to channels provided through a frequency band of a digital broadcasting signal received in the switched receiver is created.

17. The apparatus as claimed in claim 16, wherein the controller performs control operation such that the digital broadcasting program guiding data are updated if the digital broadcasting program guiding data are not updated data.

18. The apparatus as claimed in claim 17, wherein the controller performs control operation, whereby the digital broadcasting program guiding data are updated with a predetermined period of time.

19. The apparatus as claimed in claim 12, wherein the controller searches channels which are capable of providing a broadcasting service by scanning a frequency band of a digital broadcasting signal received in the switched receiver and creates a list of broadcasting programs according to the searched channels based on the digital broadcasting program guiding data.

20. The apparatus as claimed in claim 12, wherein the controller reads out detailed information of a broadcasting program which is currently broadcasted through a predetermined channel based on the digital broadcasting program guiding data according to channels if the predetermined channel is selected from the list of the broadcasting programs according to channels and displays the detailed information on the output module.

21. The apparatus as claimed in claim 20, wherein the controller performs control operation, whereby a digital broadcasting signal received through the selected channel is output if an output of broadcasting is requested through the input module in a state in which the detailed information is displayed on the output module.
